# EUROPÄISCHE PATENTSCHRIFT

(11) **EP 3 546 325 B1**
(45) Veröffentlichungstag und Bekanntmachung des Hinweises auf die Patenterteilung: **05.01.2022**
(21) Anmeldenummer: 19020023.8
(22) Anmeldetag: 16.01.2019
(51) Int. Cl.: B62D 35/00, B60K 11/08, B60Q 5/00

(54) **BUGTEIL FÜR EIN KRAFTFAHRZEUG**
FRONT SECTION FOR A MOTOR VEHICLE
PIÈCE AVANT POUR UN VÉHICULE AUTOMOBILE

(30) Priorität: 13.03.2018 DE 102018105725
(43) Veröffentlichungstag der Anmeldung: 02.10.2019
(73) Patentinhaber: Dr.Ing. h.c. F. Porsche Aktiengesellschaft, 70435 Stuttgart (DE)
(72) Erfinder: Wallrabe, Sven, 71229 Leonberg (DE); Beierl, Dominik, 70825 Korntal-Münchingen (DE); Motz, Tina, 06242 Braunsbedra (DE)

(56) Entgegenhaltungen:
- EP-A1- 2 783 844
- WO-A1-2013/169312
- DE-A1-102010 010 655
- DE-A1-102012 208 059
- DE-A1-102014 103 035
- US-A1- 2010 231 368

## Beschreibung

Die Erfindung betrifft ein Bugteil für ein Kraftfahrzeug, über das Fahrtwind in die Karosserie des Kraftfahrzeugs geleitet werden kann.

Aus US 2012/0294120 A1 ist ein in einem Bugbereich eines Kraftfahrzeugs angeordneter Ultraschall-Lautsprecher bekannt, der mit einem schalldurchlässigen aber wasserdichten Tuch abgedeckt ist, damit während der Fahrt des Kraftfahrzeugs zum Ultraschall-Lautsprecher gelangende Regentropfen zurückgehalten werden können.

Aus DE 10 2014 103 035 A1 ist ein Bugteil für ein Kraftfahrzeug bekannt, bei dem ein Schalltrichter eines Lautsprechers in einen von einem Kühlergrill kommenden Luftkanal zur Zuführung von Fahrtwind mündet, wobei im Übergang zwischen dem Schalltrichter und dem Luftkanal ein den Schalltrichter verschließendes perforiertes Luftleitelement vorgesehen ist, so dass der Fahrtwind entlang des Luftkanals geleitet werden kann und die Schallwellen des Lautsprechers über die Öffnungen des Luftleitelements nach außen gelangen können.

Aus US 2010/0231368 A1 ist ein Bugteil für ein Kraftfahrzeug bekannt, bei dem ein Schalltrichter eines Lautsprechers in einem Kühlergrill endet, wobei ein wasserabweisendes textiles Material den Lautsprecher abdeckt oder zur Abdeckung des Querschnitts des Schalltrichters mit dem Schalltrichter verbunden ist.

Es besteht ein ständiges Bedürfnis den Aufbau eines Bugteils für ein Kraftfahrzeug zu vereinfachen.

Es ist die Aufgabe der Erfindung Maßnahmen aufzuzeigen, die einen einfachen Aufbau eines Bugteils für ein Kraftfahrzeug ermöglichen.

Die Lösung der Aufgabe erfolgt erfindungsgemäß durch ein Bugteil mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Bugteil für ein Kraftfahrzeug vorgesehen mit einer Eingangsöffnung zum Einleiten von Fahrtwind, einem sich an der Eingangsöffnung anschließenden Luftkanal zur Zufuhr des Fahrtwinds an einen Kühler und/oder an ein Klimagerät, einem Luftleitelement zum Leiten des Fahrtwinds in den Luftkanal und einem Schallerzeuger, insbesondere Fanfare oder Lautsprecher, zur Abgabe eines akustischen Signals entlang eines Schallwegs, wobei das Luftleitelement zur zumindest teilweisen Abdeckung des Schallerzeugers in dem Schallweg angeordnet ist, wobei das Luftleitelement ein für das akustische Signal des Schallerzeugers schalldurchlässiges textiles Material aufweist, wobei das Luftleitelement ein von dem textilen Material kaschiertes Lochblech aufweist.

Das Luftleitelement kann während der Fahrt des Kraftfahrzeugs Fahrtwind einfangen, um den Fahrtwind über den Luftkanal zu einem Kraftfahrzeugaggregat zu leiten, wo der Fahrtwind genutzt werden kann. Insbesondere kann der zum Kraftfahrzeugaggregat geleitete Fahrtwind zur Kühlung von Fluiden genutzt werden, beispielsweise um über einen luftgekühlten Frontkühler Motoröl eines Verbrennungsmotors zu kühlen oder in einem Klimagerät zur Temperierung eines Fahrgastinnenraums genutzt zu werden. Das Luftleitelement kann hierzu innerhalb der Eingangsöffnung oder innerhalb des Luftkanals angeordnet sein. Das Luftleitelement ist hierbei derart ausgestaltet und/oder angeordnet, dass der Fahrtwind von dem Luftleitelement umgelenkt und/oder abgeleitet werden kann. Gleichzeitig ermöglicht das textile Material des Luftleitelements im Vergleich zu einer als Luftleitelement verwendeten Blechplatte eine Durchlässigkeit für Schall, so dass das von dem Schallerzeuger erzeugte akustische Signal durch das textile Material des Luftleitelements hindurchtreten kann. Insbesondere können von dem Schallerzeuger in Bewegung versetzte Luftmoleküle aufgrund des von dem Schallerzeuger aufgebauten Schalldruck durch das textile Material des Luftleitelements hindurchgedrückt werden. Hierzu ist das textile Material des Schallerzeugers vorzugsweise im Wesentlichen senkrecht zur Ausbreitungsrichtung des akustischen Signals entlang des Schallwegs ausgerichtet. Das textile Material kann hierbei vorzugsweise dicht genug ausgeführt sein, dass Regentropfen und/oder Fahrtwind bei den zu erwartenden Fahrgeschwindigkeiten des Kraftfahrzeugs im Wesentlichen nicht durch das textile Material hindurchgelangen können. Das Luftleitelement kann dadurch nicht nur die Funktion erfüllen Fahrtwind in den Luftkanal zu leiten, sondern auch die Funktion den Schallerzeuger in der Art einer Abdeckung vor Umwelteinflüssen zu schützen. Dadurch ist es nicht erforderlich für die unterschiedlichen Funktionen unterschiedliche Bauteile vorzusehen. Stattdessen können beide Funktionen in dem Luftleitelement kombiniert werden, so dass die Bauteileanzahl reduziert werden kann. Der Aufbau des Bugteils ist dadurch vereinfacht. Durch das textile Material kann nicht nur Fahrtwind abgeleitet werden, sondern auch der Schallerzeuger abgedeckt werden, ohne die Wahrnehmung des akustischen Signals signifikant zu beeinträchtigen, so dass durch die erreichbare Reduktion der Bauteileanzahl ein einfacher Aufbau eines Bugteils für ein Kraftfahrzeug ermöglicht ist.

Das textile Material des Luftleitelements kann ein flächenförmiges textiles Gebilde, beispielsweise ein Gewebe, ein Gestricke, ein Geflecht, ein Nähgewirk, ein Vliesstoff und/oder ein Filz sein. Das textile Gebilde kann insbesondere aus Fasern, insbesondere Naturfasern und/oder Chemiefasern, zusammengesetzt sein. Vorzugsweise ist das textile Material recycelbar und/oder zumindest teilweise aus einem widerverwerteten Rohstoff hergestellt. Das Luftleitelement kann beispielsweise ein insbesondere aus einem metallischen Material hergestelltes Gitter aufweisen, das mit dem textilen Material kaschiert ist, so dass dem textilen Material eine dreidimensionale Formgebung vorgegeben werden kann. Der Schallerzeuger kann insbesondere durch eine, insbesondere druckluftbetriebene, Fanfare ausgebildet sein, die von einem Fahrer des Kraftfahrzeugs als Hupe verwendet werden kann. Es ist aber auch möglich, dass der Schallerzeuger als Lautsprecher ausgestaltet ist, der insbesondere als Teil eines "Active-Sound-Design"-Systems zur aktiven Geräuschunterdrückung durch destruktive Interferenz oder zur Erzeugung eines bestimmten Motoren-Geräuschs verwendet werden kann. Insbesondere wenn das Kraftfahrzeug rein elektrisch angetrieben werden kann, kann es sinnvoll sein ein Motorengeräusch mit Hilfe eines Lautsprechers zu simulieren, damit das Kraftfahrzeug auch akustisch von anderen Verkehrsteilnehmern, insbesondere Fußgängern, leicht wahrgenommen werden kann.

Insbesondere ist das Luftleitelement für den zu leitenden Fahrtwind luftundurchlässig. Die Ausgestaltung des textilen Material und/oder die Ausrichtung des textilen Material des Luftleitelements zur Strömungsrichtung des Fahrtwinds kann derart gewählt sein, dass der Staudruck des Fahrtwinds an dem textilen Material nicht ausreicht das textile Material zu durchdringen. Insbesondere kann hierbei vorgesehen sein, dass der Schallerzeuger im Vergleich zum Staudruck des Fahrtwinds an dem textilen Material höheren Schalldruck an dem textilen Material bereitstellen kann, so dass das vom Schallerzeuger erzeugte akustische Signal das Luftleitelement durchdringen kann.

Vorzugsweise weist der Luftkanal einen kleineren Strömungsquerschnitt als die Eingangsöffnung auf, wobei das Luftleitelement zur Bündelung des an der Eingangsöffnung ankommenden Fahrtwinds in den Luftkanal in der Eingangsöffnung angeordnet ist. Das Luftleitelement kann beispielsweise Teil einer im Wesentlichen trichterförmigen Eingangsöffnung sein, so dass sich im Luftkanal ein entsprechend höherer Druck und ein entsprechend hoher Massenstrom ergeben kann. Die mit dem eingefangenen Fahrtwind erreichbare Kühlleistung kann dadurch entsprechend hoch sein. Vorzugsweise kann das Luftleitelement hierbei verhindern, dass ein signifikanter Massenstrom an dem Luftkanal vorbei auf den Schallerzeuger zu als Leckagestrom abgezweigt wird.

Besonders bevorzugt kommuniziert der Schallerzeuger über einen Schallkanal mit der Eingangsöffnung, wobei eine Ausgangsöffnung des Schallkanals, insbesondere vollständig, von dem Luftleitelement abdeckbar ist. Eine Abstrahlung des akustischen Signals beispielsweise zu einem Untergrund hin kann dadurch vermieden werden. Dies ermöglicht ein besonders lautes und konzentriertes akustisches Signal, das an dem Luftleitelement einen entsprechend hohen Schalldruck erzeugen kann. Eine die Aerodynamik des Bugteils und des Kraftfahrzeugs beeinträchtigende Öffnung im Boden des Bugteils zur Abgabe des akustischen Signals kann dadurch vermieden werden.

Insbesondere weist das textile Material des Luftleitelements gerichtete, insbesondere durch Weben und/oder Wirken miteinander verbundene, Fasern auf. Verschiedene Gruppen von Fasern können unter einem Winkel, beispielsweise rechtwinkelig, zueinander verlaufen, so dass sich besonders einfach durch Fasern begrenzte Öffnungen in dem textilen Material vorsehen lassen, die insbesondere einen besonders kleinen Öffnungsquerschnitt aufweisen können. Dadurch kann das textile Material eine Vielzahl regelmäßig in der Ebene des Luftleitelements verteile besonders kleine Öffnungen aufweisen.

Vorzugsweise weist das textile Material des Luftleitelements Öffnungen zum Durchlassen des akustischen Signals auf, wobei insbesondere ein Öffnungsquerschnitt der Öffnungen so klein ist, dass das Luftleitelement für Regentropfen wasserdicht ist. Die Öffnungen können von Luftmolekülen der von dem Schallerzeuger erzeugten Schallwellen durchdrungen werden, so dass sich die Schallwelle in Ausbreitungsrichtung der Schallwelle hinter dem Luftleitelement fortsetzen kann. Gleichzeitig ist es möglich, dass der an den Öffnungen auftreffende Fahrtwind, beispielsweise aufgrund eines schrägen Aufprallwinkels nicht durch die Öffnungen hindurchgelangen kann, sondern von dem die Öffnungen begrenzenden Material abgelenkt wird.

Besonders bevorzugt ist das Luftleitelement zur designierten Fahrtrichtung, insbesondere zur Längsrichtung, angeschrägt angeordnet, wobei insbesondere ein Anschrägungswinkel des Luftleitelements zur Fahrtrichtung zur Ausbildung einer fluiddynamischen laminaren Grenzschicht über den gesamten im Schallweg des akustischen Signals liegenden Bereich des Luftleitelements gewählt ist. Das Luftleitelement kann zur relativen Strömungsrichtung des Fahrtwinds derart angeschrägt ausgerichtet sein, dass sich eine Grenzschicht an der zum Fahrtwind weisenden Oberfläche des Luftleitelements ausbildet. Diese Grenzschicht kann als im Wesentlichen laminare Strömung an der Oberfläche des Luftleitelements entlangströmen ohne das textile Material zum Schallerzeuger hin zu durchdringen. Die Grenzschicht kann zudem als Barriere wirken, die auf die Grenzschicht auftreffenden Fahrtwind von dem textilen Material wegleitet. Ein Durchdringen des insbesondere perforierten Luftleitelements von Fahrtwind kann dadurch vermieden werden.

Vorzugsweise verläuft der von Körperschall verschiedene Anteil des akustischen Signals ausschließlich durch das Luftleitelement hindurch. Der Schallerzeuger kann vollständig eingeschlossen sein, wobei lediglich durch das Luftleitelement hindurch die vom Schallerzeuger erzeugten Schallwellen nach außen dringen können. Dies führt zu einer guten Aerodynamik des Bugteils. Gegebenenfalls kann ein Teil des von dem Schallerzeuger erzeugten akustischen Signals durch Körperschall nach außen abgestrahlt werden, wobei die den Körperschall übertragenen Bauteile aerodynamisch optimiert gestaltet sein können und keine die Aerodynamik beeinträchtigenden Auslassöffnungen für Schallwellen des Schallerzeugers aufweisen.

Besonders bevorzugt ist das Luftleitelement schwenkbar befestigt. Das Luftleitelement kann in der Art einer Klappe ausgestaltet sein, so dass beispielsweise das Luftleitelement weggeklappt werden kann, um an Schraubenverbindungen eines Stoßfängers zu gelangen. Die Montage und die Reparaturfreundlichkeit kann dadurch verbessert sein. Vorzugsweise kann das Luftleitelement schwerkraftbedingt automatisch in die beabsichtige Gebrauchsstellung schwenken, wobei insbesondere der Staudruck des Fahrtwinds das Luftleitelement in der Gebrauchsstellung festhält.

Insbesondere ist mit dem Luftleitelement ein Temperatursensor verbunden. Der Temperatursensor kann dadurch außerhalb des Luftkanals positioniert sein, so dass Verbindungsleitungen zur Übertragung der gemessenen Temperatur außerhalb des Luftkanals verlaufen können.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1: eine schematische Vorderansicht eines Kraftfahrzeugs und
- Fig. 2: eine schematische perspektivische Darstellung eines geöffneten Bugteils des Kraftfahrzeugs aus Fig. 1.

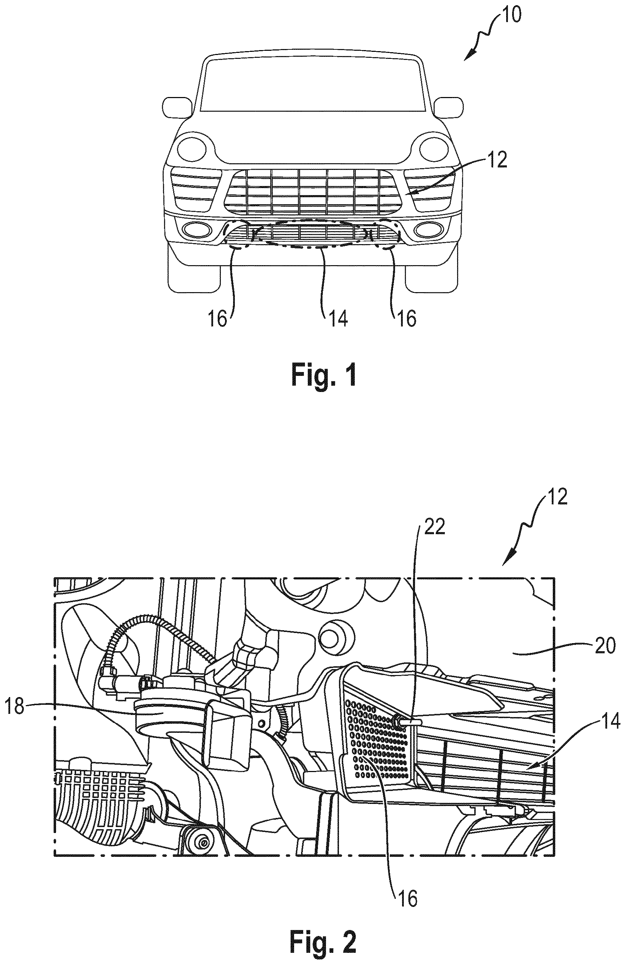

Das in Fig. 1 dargestellte, insbesondere elektrisch antreibbare, Kraftfahrzeug 10 weist ein Bugteil 12 auf. Das Bugteil 12 bildet einen Teil der Außenhaut des Kraftfahrzeugs 10 aus und weist in einem unteren Teil eine Eingangsöffnung 14 auf. Am rechten und linken Rand der Eingangsöffnung 14 ist jeweils ein zur Längsrichtung und Fahrtrichtung des Kraftfahrzeugs angeschrägt verlaufendes Luftleitelement 16 vorgesehen, so dass die Eingangsöffnung 14 mit Hilfe der Luftleitelemente 16 einen trichterförmigen Verlauf aufweist. Von der Eingangsöffnung 16 eingefangener Fahrtwind kann in einen nicht sichtbaren Luftkanal eingeleitet werden, der den Fahrwind beispielsweise einem luftgekühlten Zusatzkühler zuführt. Der Zusatzkühler kann beispielsweise einen Turbolader, eine Traktionsbatterie, einen Verbrennungsmotor oder ein sonstiges Kraftfahrzeugaggregat kühlen.

Wie in Fig. 2 dargestellt, weist das Luftleitelement 16 ein Lochblech auf, das von einem nicht dargestellten textilen Material kaschiert ist. Regentropfen und Fahrtwind können das Luftleitelement 16 von außen nicht durchdringen. Hinter dem Luftleitelement 16 ist ein beispielsweise als druckluftbetriebene Fanfare ausgestalteter Schallerzeuger 18 vorgesehen in dessen Schallweg das textile Material des Luftleitelements 16 im Wesentlichen senkrecht zur Ausbreitungsrichtung der von dem Schallerzeuger erzeugten Schallwellen angeordnet ist. Insbesondere werden die Schallwellen über einen nicht dargestellten von dem Schallerzeuger bis zum Luftleitelement 16 verlaufenden Schallkanal konzentriert auf das Luftleitelement 16 zugeführt, wo der Schalldruck ausreicht, dass die Schallwellen das insbesondere perforierte textile Material des Luftleitelements 16 durchdringen. Regentropfen können von dem textilen Material des Luftleitelements 16 zurückgehalten werden und nicht zum Schallerzeuger 18 gelangen. Durch die zur Fahrtrichtung angeschrägte Ausrichtung des Luftleitelements 16 kann auch Fahrtwind das textile Material des Luftleitelements 16 nicht durchdringen, da sich insbesondere an der Oberfläche des Luftleitelements eine durch den Fahrtwind erzeugte laminare Grenzschicht ausbildet.

Das Luftleitelement 16 kann beispielsweise schwenkbar ausgestaltet sein, so dass eine hinter dem Luftleitelement 16 vorgesehene Schraubenverbindung eines Stoßfängers 20 zugänglich gemacht werden kann. Zudem ist es möglich mit dem Luftleitelement 16 einen Temperatursensor 22 zu verbinden.

## Patentansprüche

1. Bugteil für ein Kraftfahrzeug (10) mit
einer Eingangsöffnung (14) zum Einleiten von Fahrtwind,
einem sich an der Eingangsöffnung (14) anschließenden Luftkanal zur Zufuhr des Fahrtwinds an einen Kühler und/oder an ein Klimagerät,
einem Luftleitelement (16) zum Leiten des Fahrtwinds in den Luftkanal und
einem Schallerzeuger (18), insbesondere Fanfare oder Lautsprecher, zur Abgabe eines akustischen Signals entlang eines Schallwegs,
wobei das Luftleitelement (16) zur zumindest teilweisen Abdeckung des Schallerzeugers (18) in dem Schallweg angeordnet ist,
**dadurch gekennzeichnet, dass**
das Luftleitelement (16) ein für das akustische Signal des Schallerzeugers (18) schalldurchlässiges textiles Material aufweist,
wobei das Luftleitelement (16) ein von dem textilen Material kaschiertes Lochblech aufweist.

2. Bugteil nach Anspruch 1 **dadurch gekennzeichnet, dass** das Luftleitelement (16) für den zu leitenden Fahrtwind luftundurchlässig ist.

3. Bugteil nach Anspruch 1 oder 2 **dadurch gekennzeichnet, dass** der Luftkanal einen kleineren Strömungsquerschnitt als die Eingangsöffnung (14) aufweist, wobei das Luftleitelement (16) zur Bündelung des an der Eingangsöffnung (14) ankommenden Fahrtwinds in den Luftkanal in der Eingangsöffnung (14) angeordnet ist.

4. Bugteil nach einem der Ansprüche 1 bis 3 **dadurch gekennzeichnet, dass** der Schallerzeuger (18) über einen Schallkanal mit der Eingangsöffnung (14) kommuniziert, wobei eine Ausgangsöffnung des Schallkanals, insbesondere vollständig, von dem Luftleitelement (16) abdeckbar ist.

5. Bugteil nach einem der Ansprüche 1 bis 4 **dadurch gekennzeichnet, dass** das textile Material des Luftleitelements (16) gerichtete, insbesondere durch Weben und/oder Wirken miteinander verbundene, Fasern aufweist.

6. Bugteil nach einem der Ansprüche 1 bis 5 **dadurch gekennzeichnet, dass** das textile Material des Luftleitelements (16) Öffnungen zum Durchlassen des akustischen Signals aufweist, wobei insbesondere ein Öffnungsquerschnitt der Öffnungen so klein ist, dass das Luftleitelement (16) für Regentropfen wasserdicht ist.

7. Bugteil nach einem der Ansprüche 1 bis 6 **dadurch gekennzeichnet, dass** das Luftleitelement (16) zur designierten Fahrtrichtung, insbesondere zur Längsrichtung, angeschrägt angeordnet ist, wobei insbesondere ein Anschrägungswinkel des Luftleitelements (16) zur Fahrtrichtung zur Ausbildung einer fluiddynamischen laminaren Grenzschicht über den gesamten im Schallweg des akustischen Signals liegenden Bereich des Luftleitelements (16) gewählt ist.

8. Bugteil nach einem der Ansprüche 1 bis 7 **dadurch gekennzeichnet, dass** der von Körperschall verschiedene Anteil des akustischen Signals ausschließlich durch das Luftleitelement (16) hindurch verläuft.

9. Bugteil nach einem der Ansprüche 1 bis 8 **dadurch gekennzeichnet, dass** das Luftleitelement (16) schwenkbar befestigt ist.

## Claims

1. Front end part for a motor vehicle (10), comprising
an inlet opening (14) for the introduction of headwind,
an air duct adjoining the inlet opening (14) for supplying the headwind to a radiator and/or to an air conditioning device,
an air-directing element (16) for directing the headwind into the air duct, and
a sound generator (18), in particular fanfare or speaker, for outputting an acoustic signal along a sound path,
wherein the air-directing element (16) is arranged for at least partially covering the sound generator (18) in the sound path,
**characterized in that**
the air-directing element (16) has a textile material which is sound-permeable for the acoustic signal of the sound generator (18),
wherein the air-directing element (16) has a perforated sheet backed by the textile material.

2. Front end part according to Claim 1, **characterized in that** the air-directing element (16) is air-impermeable for the headwind which is to be directed.

3. Front end part according to Claim 1 or 2, **characterized in that** the air duct has a smaller flow cross section than the inlet opening (14), wherein the air-directing element (16) is arranged for bundling the headwind arriving at the inlet opening (14) into the air duct in the inlet opening (14).

4. Front end part according to one of Claims 1 to 3, **characterized in that** the sound generator (18) communicates with the inlet opening (14) via a sound duct, wherein an outlet opening of the sound duct can be covered, in particularly completely, by the air-directing element (16).

5. Front end part according to one of Claims 1 to 4, **characterized in that** the textile material of the air-directing element (16) has fibres which are directed, in particular are connected to one another by weaving and/or knitting.

6. Front end part according to one of Claims 1 to 5, **characterized in that** the textile material of the air-directing element (16) has openings for the passage of the acoustic signal, wherein in particular an opening cross section of the openings is of such a small size that the air-directing element (16) is waterproof for raindrops.

7. Front end part according to one of Claims 1 to 6, **characterized in that** the air-directing element (16) is arranged bevelled with respect to the designated direction of travel, in particular to the longitudinal direction, wherein in particular an angle of bevel of the air-directing element (16) with respect to the direction of travel is selected for forming a fluid-dynamic laminar boundary layer over the entire region of the air-directing element (16) lying in the sound path of the acoustic signal.

8. Front end part according to one of Claims 1 to 7, **characterized in that** that portion of the acoustic signal which differs from structure-borne sound runs exclusively through the air-directing element (16).

9. Front end part according to one of Claims 1 to 8, **characterized in that** the air-directing element (16) is fastened pivotably.

## Revendications

1. Pièce avant pour un véhicule automobile (10), comprenant :
une ouverture d'entrée (14) pour l'introduction de vent de marche,
un canal d'air raccordé à l'ouverture d'entrée (14), pour l'acheminement du vent de marche à un radiateur et/ou à un appareil de climatisation,
un élément de guidage d'air (16) pour le guidage du vent de marche dans le canal d'air et
un générateur de son (18), notamment une fanfare ou un haut-parleur, pour l'émission d'un signal acoustique le long d'un trajet de son,
l'élément de guidage d'air (16) étant agencé dans le trajet de son pour recouvrir au moins partiellement le générateur de son (18),
**caractérisée en ce que**
l'élément de guidage d'air (16) comprend un matériau textile perméable au son pour le signal acoustique du générateur de son (18),
l'élément de guidage d'air (16) comprenant une plaque perforée masquée par le matériau textile.

2. Pièce avant selon la revendication 1, **caractérisée en ce que** l'élément de guidage d'air (16) est imperméable à l'air pour le vent de marche à guider.

3. Pièce avant selon la revendication 1 ou 2, **caractérisée en ce que** le canal d'air présente une section transversale d'écoulement plus petite que l'ouverture d'entrée (14), l'élément de guidage d'air (16) étant agencé dans l'ouverture d'entrée (14) pour la focalisation du vent de marche arrivant à l'ouverture d'entrée (14) dans le canal d'air.

4. Pièce avant selon l'une quelconque des revendications 1 à 3, **caractérisée en ce que** le générateur de son (18) communique par l'intermédiaire d'un canal de son avec l'ouverture d'entrée (14), une ouverture de sortie du canal de son pouvant être recouverte, notamment en totalité, par l'élément de guidage d'air (16).

5. Pièce avant selon l'une quelconque des revendications 1 à 4, **caractérisée en ce que** le matériau textile de l'élément de guidage d'air (16) comprend des fibres orientées, notamment reliées entre elles par tissage et/ou tricotage.

6. Pièce avant selon l'une quelconque des revendications 1 à 5, **caractérisée en ce que** le matériau textile de l'élément de guidage d'air (16) comprend des ouvertures pour le passage du signal acoustique, une section transversale d'ouverture des ouvertures étant notamment si petite que l'élément de guidage d'air (16) est étanche à l'eau pour les gouttes de pluie.

7. Pièce avant selon l'une quelconque des revendications 1 à 6, **caractérisée en ce que** l'élément de guidage d'air (16) est agencé de manière inclinée par rapport à la direction de marche prévue, notamment par rapport à la direction longitudinale, un angle d'inclinaison de l'élément de guidage d'air (16) par rapport à la direction de marche étant notamment choisi pour la formation d'une couche limite laminaire fluidodynamique sur l'ensemble de la zone de l'élément de guidage d'air (16) située dans le trajet de son du signal acoustique.

8. Pièce avant selon l'une quelconque des revendications 1 à 7, **caractérisée en ce que** la proportion du signal acoustique autre que le son structurel passe exclusivement par l'élément de guidage d'air (16).

9. Pièce avant selon l'une quelconque des revendications 1 à 8, **caractérisée en ce que** l'élément de guidage d'air (16) est fixé de manière pivotante.
